# EUROPÄISCHE PATENTSCHRIFT

(11) **EP 3 446 848 B1**
(45) Veröffentlichungstag und Bekanntmachung des Hinweises auf die Patenterteilung: **18.09.2024**
(21) Anmeldenummer: 18186891.0
(22) Anmeldetag: 01.08.2018
(51) Int. Cl.: B29C 44/14

(54) **DÄMMELEMENT SOWIE VERFAHREN ZUR HERSTELLUNG EINES SOLCHEN**
INSULATING ELEMENT AND METHOD FOR MANUFACTURING THE SAME
ÉLÉMENT ISOLANT AINSI QUE SON PROCÉDÉ DE FABRICATION

(30) Priorität: 24.08.2017 DE 102017119382
(43) Veröffentlichungstag der Anmeldung: 27.02.2019
(73) Patentinhaber: Knaus Tabbert AG, 94118 Jandelsbrunn (DE)
(72) Erfinder: Kornexl, Christian, 94133 Röhrnbach (DE)
(74) Vertreter: advotec.

(56) Entgegenhaltungen:
- DE-A1- 102013 006 300
- DE-A1- 102015 005 504
- DE-B4- 102010 025 137
- GB-A- 1 163 501
- JP-A- H03 124 411
- US-A- 4 379 103
- US-A- 5 173 227
- US-A1- 2016 214 548

## Beschreibung

Die vorliegende Erfindung betrifft ein Dämmelement für die Herstellung von Rahmenteilen, insbesondere von Rahmenteilen zur Herstellung von Freizeitfahrzeugen (wie z.B. Wohnwagen, Wohnmobile etc.) sowie ein Verfahren zur Herstellung eines solchen Dämmelements. Derartige Dämmelemente sowie Verfahren zur Herstellung derartiger Dämmelemente sind aus dem Stand der Technik bekannt. So werden derartige Dämmelemente häufig in Form von PU-Formteilen in speziellen Gusswerkzeugen hergestellt, indem beispielsweise Polyurethan in ein entsprechend geformtes Gusswerkzeug eingebracht wird. Dort kann das Polyurethan aufschäumen und aushärten, sodass nach dem Entnehmen des ausgehärteten Polyurethans ein der Form des Gusswerkzeuges entsprechendes Formteil vorliegt.

Um eine höhere Stabilität zu erreichen, werden die so hergestellten Formteile häufig mit einem Mantel, der meist ebenfalls aus Polyurethan besteht, umhüllt. So ist es aus DE 10 2010 025 137 B4 bekannt, einen Leichtbaukern aus einem Polyurethan-Leichtschaum mit einem tragenden, faserverstärkten Polyurethan-System zu umschäumen. Der Nachteil der mit einem solchen Verfahren hergestellten Formteile besteht darin, dass sich die Verstärkungsfasern im Mantel auf der Oberfläche des Formteils abzeichnen, was natürlich negative Auswirkungen auf die Optik und Haptik des Formteils hat. Auch ist die Steifigkeit und Stabilität der so hergestellten Formteile nicht optimal.

US 5 173 227 A beschreibt ein Dämmelement mit einem Grundkörper aus härtbarem Kunststoff sowie mindestens zwei, in den härtbaren Kunststoff integrierten flächenartigen Verstärkungselementen.

Ein ähnliches Element wird auch US 2016/0214548 A1 offenbart.

DE 10 2015 005 504 A1 beschreibt ein Verfahren zur Herstellung eines faserverstärkten Kunststoffbauteils in einem RTM-Prozess. Bei diesem Verfahren wird ein Faserhalbzeug in einem Preformschritt unter Bildung eines Vorformlings dreidimensional umgeformt. Dieser Vorformling wird in einem Injektionsschritt in eine Werkzeugkavität eines Injektionswerkzeugs eingelegt. Danach wird das Faserhalbzeug umschäumt.

DE 10 2013 006 300 A1 betrifft ein Verfahren zur Herstellung eines Strukturbauteils unter Bereitstellen eines Leichtbaukerns, welcher von einer Schaummasse umflutet wird.

JP H03 124411 A beschreibt ein Verfahren zur Herstellung eines Leichtbauteils in einer Werkzeugkavität unter Verwendung von Polyurethan.

US 4 379 103 A beschreibt ein Verfahren mit den Merkmalen des Oberbegriffs des Anspruchs 1.

GB 1 163 501 A beschreibt faserverstärkte Kunststoffprodukte, welche u.a. Polyurethan umfassen können.

Der vorliegenden Erfindung liegt die Aufgabe zugrunde, ein Dämmelement sowie ein Verfahren zur Herstellung eines solchen Dämmelements zur Verfügung zu stellen, mit welchem die Nachteile aus dem Stand der Technik überwunden werden können. Der Erfindung liegt insbesondere die Aufgabe zugrunde, ein Dämmelement zur Verfügung zu stellen, welches neben einer optimalen Optik auch eine verbesserte Stabilität und Steifigkeit aufweist.

Diese Aufgabe wird erfindungsgemäß durch ein Verfahren mit den Merkmalen des Anspruchs 1 gelöst.

Durch die Tatsache, dass im Arbeitsschritt b) des erfindungsgemäßen Verfahrens mindestens zwei getrennt voneinander vorliegende flächenartige Verstärkungselemente in das Formwerkzeug eingelegt werden, entsteht nach Ausführung der sich anschließenden Arbeitsschritte c) bis e) ein Dämmelement, in welchem mindestens zwei voneinander unabhängige flächenartige Verstärkungselemente integriert sind. Es hat sich herausgestellt, dass insbesondere durch das Vorliegen von zwei flächenartigen Verstärkungselementen, beispielsweise von zwei Glasfasermatten, eine besonders hohe Steifigkeit und Stabilität des Dämmelements erzielt werden kann. Dies ist insbesondere bei einer Verwendung bei der Herstellung von langgestreckten Fahrzeug-Rahmenteilen (wie z.B. von Hecksäulen) von großem Vorteil.

Des Weiteren kann das so hergestellte Dämmelement hervorragend als Kern zur weiteren Verwendung bei der Herstellung spezieller Rahmenteile verwendet werden. So kann das erfindungsgemäß hergestellte Dämmelement noch mit einer Umhüllung, wie beispielsweise einem Mantel aus kompaktem Polyurethan umgeben werden. Mit einer derartigen Weiterverarbeitung wird auch sicher verhindert, dass sich die im Kern befindlichen Verstärkungselemente auf der Oberfläche abzeichnen.

Das beim erfindungsgemäßen Verfahren verwendete Polyurethan enthält Trennmittel. Dieses Trennmittel wandert beim Formprozess in Richtung der warmen Formflächen des Formwerkzeugs und benetzt diese.

Bei einer besonders bevorzugten Variante des erfindungsgemäßen Verfahrens handelt es sich bei den flächenartigen Verstärkungselementen um Matten, Gewebe oder Gewirke, wobei die flächenartigen Verstärkungselemente vorzugsweise aus Glasfasern gefertigt sind. Es hat sich herausgestellt, dass insbesondere Glasfasermatten oder - gewebe die Steifigkeit und Stabilität des Dämmelements besonders positiv beeinflussen.

Mit Vorteil handelt es sich bei den flächenartigen Verstärkungselementen um Glasfasermatten mit einem Gewicht von ca. 240 bis 360 g/m². Mit derartigen Glasfasermatten lassen sich besonders steife und stabile Bauteile herstellen, die sich auch noch durch eine besondere Leichtigkeit auszeichnen.

Bei einer besonders bevorzugten Variante des erfindungsgemäßen Verfahrens handelt es sich bei der fließfähigen, aushärtbaren Kunststoffmasse um Polyurethan, insbesondere um Polyurethan mit einer Schaumdichte von ca. 70 kg/m³. Insbesondere mit einem Polyurethan mit der genannten Schaumdichte können Dämmelemente mit hoher Steifigkeit und zugleich besonders geringem Gewicht hergestellt werden. Mit Vorteil weist der fertige Polyurethanschaum einen mit Polystyrol vergleichbaren U-Wert auf. Mit einem derartigen Polyurethanschaum als Werkstoff für ein herzustellendes Dämmelement kann eine besonders vorteilhafte Dämmwirkung erzielt werden.

Mit Vorteil werden die Formteile des Formwerkzeuges vor dem Positionieren der flächenartigen Verstärkungselemente an diesen mit Trennmittel beschichtet. Dadurch wird gewährleistet, dass sich das fertig hergestellte Dämmelement wieder problemlos aus dem Formwerkzeug entnehmen lässt.

An den Verfahrensschritt e) schließen sich folgende Schritte an:
f) Anordnen von Abstandshaltern am Dämmelement;
g) Einlegen des Dämmelements in ein schließbares Schäumwerkzeug, wobei die gesamte Oberfläche des Dämmelements durch die von ihm abragenden Abstandshalter von Formflächen des Schäumwerkzeugs beabstandet gehalten wird;
h) Umfluten des Dämmelements im geschlossenen Schäumwerkzeug mit einer aushärtbaren Kunststoffmasse;
i) Aushärtenlassen der Kunststoffmasse im Schäumwerkzeug;
j) Öffnen des Schäumwerkzeugs und Entnehmen des nun ummantelten Dämmelements.

Mit den genannten Verfahrensschritten lässt sich ein ummanteltes Dämmelement mit komplettem Polyurethan-Schaumkern, welcher keine Fehlstellen zeigt, herstellen. Mit einem derartigen KunststoffMantel wird eine hohe Steifigkeit bei geringem Gewicht erreicht. Der Mantel (Außenschicht) ist vollständig geschlossen und ein sich Abzeichnen von Verstärkungselementen auf der Oberfläche des Dämmelements ist - abhängig von der Dicke des Mantels - so gut wie ausgeschlossen. Vorzugsweise werden die Formflächen des Schäumwerkzeugs vor dem Arbeitsschritt g) mit Trennmittel und/oder Lack, insbesondere In-Mould-Lack beschichtet. Ein Beschichten der Formflächen mit Trennmittel hat den Vorteil, dass sich das fertige Dämmelement problemlos aus dem Schäumwerkzeug entnehmen lässt.

Besonders vorteilshaft ist das Beschichten der Formflächen des Schäumwerkzeugs mit In-Mould-Lack. Hierdurch wird ein kompletter Arbeitsschritt in Form eines Lackierungsschrittes eingespart. Ein weiterer Vorteil besteht bei diesem Vorgehen darin, dass das Dämmelement vor dem Einlegen in das Schäumwerkzeug nicht geschliffen oder anderweitig bearbeitet werden muss. Bei der In-Mould-Lackierung geht der Lack eine stoffschlüssige Verbindung mit der KunststoffMasse, insbesondere mit dem Polyurethanschaum ein. Hierdurch wird eine UV-stabile, hochglänzende Oberfläche des fertigen Dämmelements erzielt. Auch zwischen dem Schaumkern und der Außenschicht besteht eine form- und stoffschlüssige Verbindung. Als Beispiel eines solchen Lackes sei ein wasserverdünnbares 2-Komponenten-PU-System genannt (z.B. 2K-Hydro-IMC-Topcoat der Firma Fujichem Sonnenbom Limited).

Mit Vorteil handelt es sich bei der aushärtbaren KunststoffMasse des Mantels um Polyurethan, insbesondere um kompaktes Polyurethan mit einer Dichte von ca. 1.000 kg/m³. Mit einem derartigen Polyurethan ist es möglich, einen in Leichtbauweise hergestellten Polyurethankern mit einem besonders steifen Mantel zu umziehen. Auf diese Art und Weise entsteht ein besonders steifes und stabiles Bauteil, welches sich zudem durch ein besonders niedriges Gewicht auszeichnet.

Mit Vorteil werden die Abstandshalter in Schritt f) in das Dämmelement eingedrückt. Hierzu weisen die Abstandshalter vorzugsweise nadel- oder nagelartige Elemente auf, welche es ermöglichen, die Abstandshalter besonders leicht und einfach in das Dämmelement einzudrücken. Durch eindrückbare Abstandshalter ist es besonders einfach möglich, die Position dieser Abstandshalter völlig frei zu wählen. Hierdurch ist es wiederum möglich, eine optimale Position des Dämmelements im Schäumwerkzeug herzustellen.

Die vorliegende Erfindung betrifft ferner ein Dämmelement, hergestellt durch ein erfindungsgemäßes Verfahren, umfassend einen Grundkörper aus härtbarem Kunststoff sowie mindestens zwei, in den härtbaren Kunststoff integrierte flächenartige Verstärkungselemente, wobei es sich bei dem härtbaren Kunststoff um Polyurethan handelt.

Die Vorteile des erfindungsgemäßen Dämmelements wurden bereits im Rahmen des erfindungsgemäßen Verfahrens dargelegt. An dieser Stelle sei noch einmal an die vorteilhafte Wirkung, welche durch die mindestens zwei flächenartigen Verstärkungselemente erzielt werden kann, hingewiesen. Durch die mindestens zwei, voneinander unabhängigen flächenartigen Verstärkungselemente wird eine besonders hohe Steifigkeit und Stabilität des Dämmelements erreicht. Dies ist insbesondere bei langgestreckten Rahmenteilen von Fahrzeugen, insbesondere von Freizeitfahrzeugen von großem Nutzen.

Wie ebenfalls im Rahmen des erfindungsgemäßen Verfahrens dargelegt, handelt es sich bei den flächenartigen Verstärkungselementen vorzugsweise um Matten, Gewebe oder Gewirke. Mit Vorteil sind diese Strukturen aus Glasfasern gefertigt.

Vorzugsweise sind die mindestens zwei flächenartigen Verstärkungselemente voneinander beabstandet angeordnet. Dies trägt zu einer noch höheren Steifigkeit und Stabilität des Dämmelements bei.

Mit Vorteil handelt es sich bei dem härtbaren Kunststoff um Polyurethan mit einer Schaumdichte von ca. 70 kg/m³. Dieses Polyurethan weist vorzugsweise einen mit Polystyrol vergleichbaren U-Wert auf. Die Vorteile dieses Materials wurden bereits im Rahmen des erfindungsgemäßen Verfahrens diskutiert und gelten auch für das erfindungsgemäße Dämmelement.

Mit Vorteil weist der Grundkörper des erfindungsgemäßen Dämmelements eine Ummantelung, insbesondere eine Ummantelung aus Polyurethan auf. Auch die Vorteile einer derartigen Ummantelung wurden bereits oben dargelegt.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figuren 1-6:: den schematischen Ablauf eines erfindungsgemäßen Verfahrens;
- Figur 7a:: eine Seitenansicht eines beim erfindungsgemäßen Verfahren bzw. beim erfindungsgemäßen Dämmelement benutzten Abstandshalters;
- Figur 7b:: eine Draufsicht auf den Abstandshalter von Figur 7a.

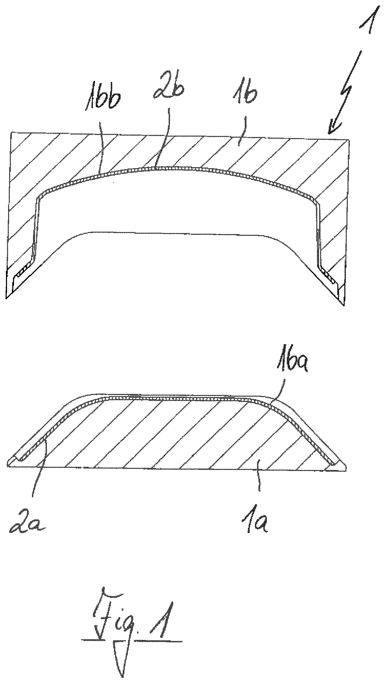

Anhand der Figuren 1 bis 6 soll nun eine bevorzugte Verfahrensvariante eines erfindungsgemäßen Verfahrens illustriert werden:
Wie in Figur 1 gezeigt ist, wird zunächst ein zweiteiliges, offen- und schließbares Formwerkzeug 1 mit einem unteren Formteil 1a und einem oberen Formteil 1b bereitgestellt. Figur 1 zeigt das Formwerkzeug 1 im geöffneten Zustand, in dem die Formteile 1a und 1b voneinander getrennt sind.

In den Figuren 1 bis 3 ist das Formwerkzeug 1 und die Formteile 1a und 1b im Querschnitt dargestellt.

Zunächst werden die Formflächen 16a, 16b der Formteile 1a und 1b mit Trennmittel beschichtet (hier nicht dargestellt). Dann wird an die Formfläche 16a des unteren Formteils 1a eine Glasfasermatte 2a angeformt. Auch an die Formfläche 16b des oberen Formteils 1b wird eine Glasfasermatte 2b angeformt.

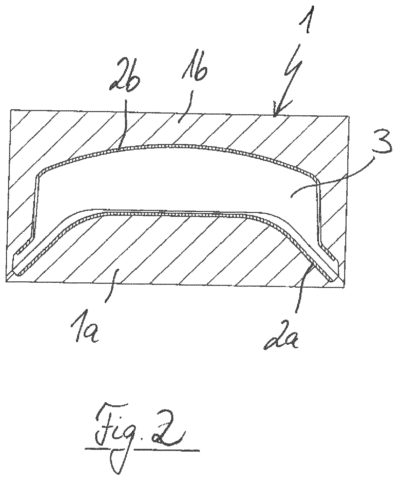

In einem nächsten Schritt wird das Formwerkzeug 1 geschlossen. Der geschlossene Zustand des Formwerkzeugs 1 ist in Figur 2 dargestellt. Im geschlossenen Zustand des Formwerkzeuges 1 bilden die Formteile 1a und 1b einen Hohlraum 3, wobei dieser Hohlraum die dreidimensionale Außenform des in einer ersten Stufe herzustellenden Dämmelements wiedergibt. Im geschlossenen Zustand des Formwerkzeuges sind die Formteile 1a und 1b miteinander verbunden. Im in Figur 2 gezeigten geschlossenen Zustand des Formwerkzeuges 1 befinden sich die Glasfasermatten 2a und 2b im Hohlraum 3, wobei die Glasfasermatten 2a und 2b voneinander beabstandet im Hohlraum 3 angeordnet sind und sich nicht berühren.

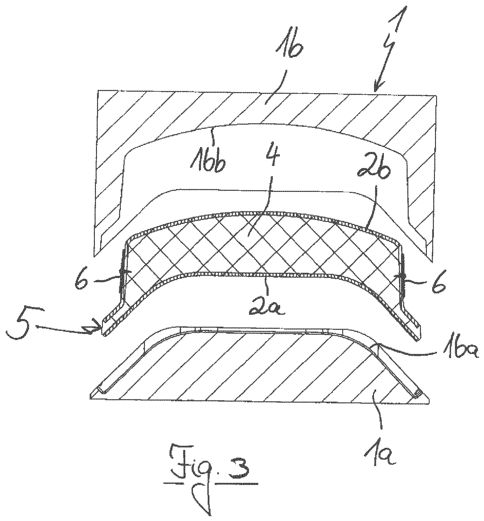

In einem nächsten Schritt wird eine fließfähige, aushärtbare Kunststoffmasse in Form von Polyurethan 4 mit einer Schaumdichte von ca. 70 kg/m³ in den Hohlraum 3 des Formwerkzeuges 1 eingebracht. Anschließend lässt man das zunächst fließfähige Polyurethan 4 im Hohlraum 3 aushärten. Nachdem das Polyurethan 4 ausgehärtet ist, wird das Formwerkzeug 1 durch Trennen der Formteile 1a und 1b geöffnet und das fertige, erfindungsgemäße Dämmelement 5 kann entnommen werden. Dies ist in Figur 3 dargestellt. Das Dämmelement 5 weist an seiner Oberfläche die beiden Glasfasermatten 2a und 2b auf, die getrennt voneinander vorliegen. Bei den Glasfasermatten handelt es sich im vorliegenden Beispiel um solche mit einem Gewicht von ca. 300 g/m².

Das Dämmelement 5 wird bei der vorliegenden Verfahrensvariante weiter bearbeitet, wobei sich nun folgende weitere Verfahrensschritte anschließen.

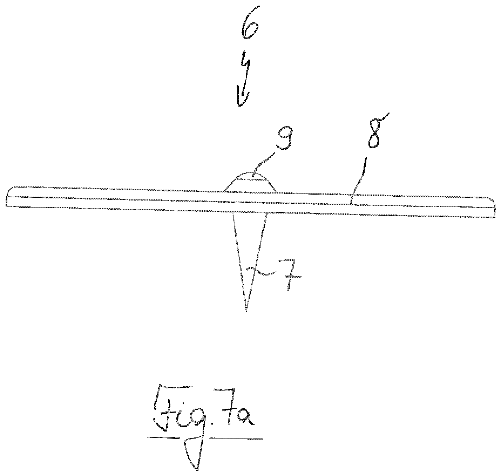

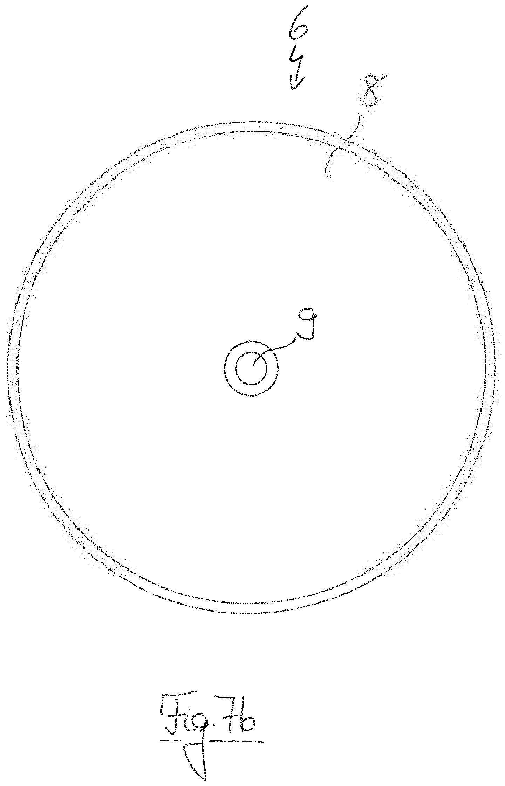

Zunächst wird das in Figur 3 im Querschnitt dargestellte Dämmelement 5 mit Abstandshaltern in Form von Fixierpins 6 in das Dämmelement eingedrückt. Dieser Verfahrensschritt ist ebenfalls in Figur 3 dargestellt, die das Dämmelement 5 mit den Fixierpins 6 zeigt. Ein Beispiel eines Fixierpins ist in den Figuren 7a und 7b dargestellt. Die Fixierpins 6 weisen einen Einstechdorn 7 auf, welcher in das Dämmelement 5 eingedrückt wird. Der Einstechdorn 7 eines Fixierpins 6 ist im Zentrum einer kreisförmigen Basisplatte 8 positioniert. Auf der anderen Seite der Basisplatte 8 ist ebenfalls zentral ein abgerundet ausgebildeter Distanzknopf angeordnet. Die Fixierpins 6 sind aus thermoplastischem Kunststoff gefertigt.

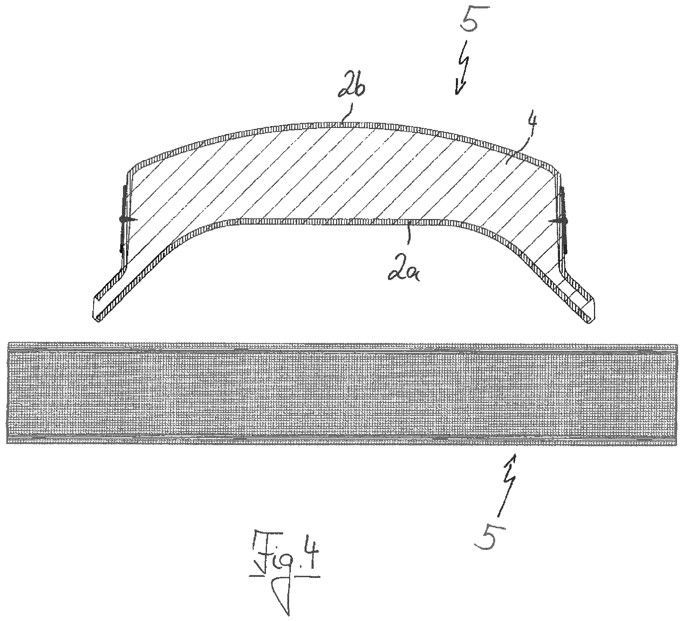

Auch Figur 4 zeigt noch einmal das Dämmelement 5 mit den Fixierpins 6, wobei in einer oberen Darstellung das Dämmelement 5 im Querschnitt, in einer unteren Darstellung in einer Draufsicht dargestellt ist.

In einem nächsten Schritt wird nun das Dämmelement 5 mit den als Abstandshalter dienenden Fixierpins 6 in ein Schäumwerkzeug 10 eingelegt. Auch das Schäumwerkzeug 10 umfasst - analog zum Formwerkzeug 1 - ein unteres Formteil 11a und ein oberes Formteil 11b. Die Formflächen 12 der Formteile 11a und 11b des Schäumwerkzeugs 10 wurden vorher mit In-Mould-Lack beschichtet.

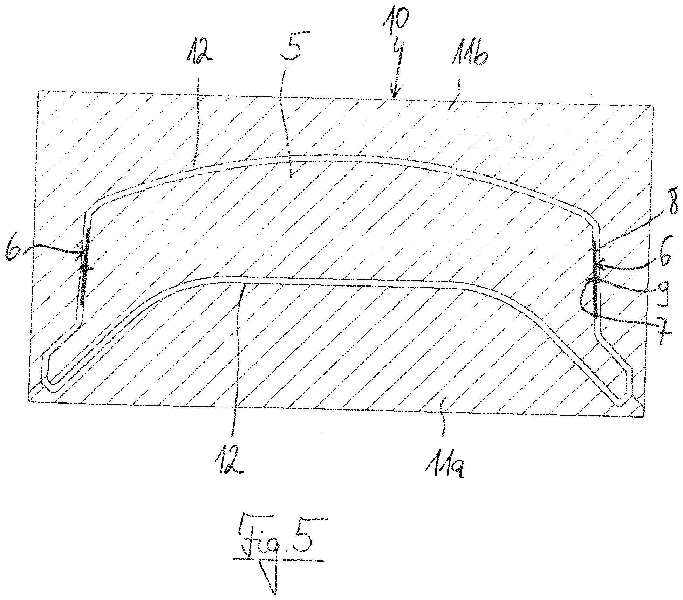

Die Formteile 11a und 1 1b sind im geöffneten Zustand des Schäumwerkzeugs 10 voneinander getrennt. In diesem Zustand wird auch das Dämmelement 5 in das Schäumwerkzeug 10 eingelegt. Anschließend wird das Formwerkzeug 10 geschlossen, indem die Formteile 11a und 11b miteinander verbunden werden. Dieser Zustand ist in Figur 5 dargestellt. Durch die Fixierpins 6 wird die gesamte Oberfläche des Dätnmelements 5 von den Formflächen 12 des Schäumwerkzeugs 10 beabstandet gehalten. Wie in Figur 5 gut zu erkennen ist, sind es insbesondere die Distanzknöpfe 9 der Fixierpins 6, die die Oberfläche des Dämmelements 5 von den Formflächen 12 des Schäumwerkzeugs 10 beabstandet halten, indem die Distanzknöpfe 9 die Formflächen 12 des Schäumwerkzeugs 10 kontaktieren.

In der vorliegenden Darstellung (Figur 5) wurde der besseren Übersicht halber auf die Darstellung der an der Peripherie des Dämmelements 5 befindlichen Glasfasermatten 2a und 2b verzichtet.

Im nächsten Schritt wird das Dämmelement 5 im geschlossenen Schäumwerkzeug 10 mit einer aushärtbaren Kunststoffmasse in Form von kompaktem Polyurethan mit einer Dichte von ca. 1.000 kg/m³ umflutet.

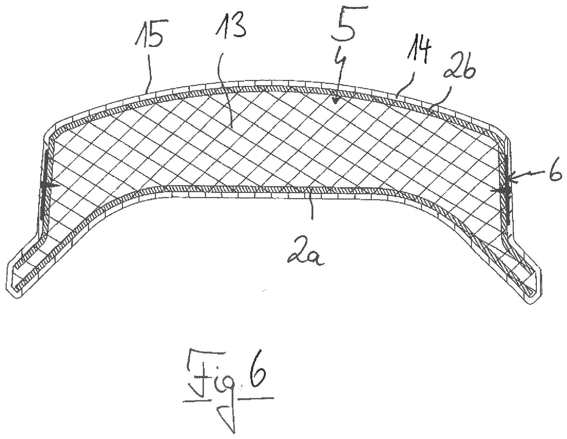

Anschließend lässt man das Polyurethan im Schäumwerkzeug aushärten. Danach wird das Schäumwerkzeug 10 durch Trennen der Formteile 11a und 11b geöffnet und das nun ummantelte Dämmelement 5 wird aus dem Schäumwerkzeug entnommen. Dieses Dämmelement 5 ist in Figur 6 dargestellt. Es umfasst nun einen Kern 13 aus leichtem Polyurethan mit zwei an der Peripherie des Kerns angeordneten Glasfasermatten. Dieser Kern 13 ist von einem Mantel 14 aus kompaktem Polyurethan umgeben. Durch die Tatsache, dass vor dem Einbringen des Dämmelements 5 in das Schäumwerkzeug 10 die Formflächen 12 des Schäumwerkzeugs 10 mit In-Mould-Lack beschichtet wurden, weist der Mantel 14 an seiner Oberfläche eine dünne Schicht 15 aus In-Mould-Lack auf. Durch diese Vorgehensweise wird ein kompletter Lackierungsschritt eingespart. Die Basisplatten 8 und die Distanzknöpfe 9 der Fixierpins 6 sind im Mantel 14 eingeschäumt.

Wie bereits in der Beschreibungseinleitung dargelegt, weist das mit dem oben beschriebenen Verfahren hergestellte Dämmelement verschiedene Vorteile auf. Durch den Schaumkern 13 mit integrierten Glasfasermatten 2a, 2b wird eine hohe Steifigkeit des Schaumkerns 13 erreicht. Durch das Ummanteln des Kerns 13 mit dem Mantel 14 wird eine hohe Steifigkeit des Gesamtelements bei geringem Gewicht erreicht. Zudem wird eine vollständig geschlossene Außenschicht erhalten. Zwischen dem Kern 13 und dem Mantel 14 besteht eine stoffschlüssige Verbindung.

Das Material des Kerns 13 hat vorzugsweise folgende technische Eigenschaften:
- Drucksteifigkeit 700 mPa +/- 150 mPa;
- Schwindverhalten 0,2 % +/- 0,1;
- Gewicht/Dichte 70 kg/m³ +/- 30 kg/m³.

Zu den technischen Eigenschaften des Mantelmaterials:
- Schwindverhalten 0,1 % +/- 0,2;
- Gewicht/Dichte 1.000 kg/m³ +/- 200 kg/m³;
- Viskosität der Einzelkomponenten ca. 1.000 mPa*s -500/+200 mPa*s.

Vorteilhaft ist es auch, dass sowohl das Kern- als auch das Mantelmaterial nicht brennbar oder zumindest flammhemmend eingestellt werden kann.

Zu den technischen Eigenschaften des In-Mould-Lacks:
- lösemittelhaltig oder auf Wasserbasis;
- schnelltrocknend - ca. 60 Sekunden bei einer Werkzeugtemperatur von 50°C;
- UV-beständig;
- witterungsbeständig - analog einer allgemeinen Fahrzeuglackierung.

Bei dem oben dargestellten Dämmelement 5 handelt es sich vorliegend um die Hecksäule eines Reisemobils.

## Patentansprüche

1. Verfahren zur Herstellung eines Dämmelements für die Herstellung von Rahmenteilen, umfassend folgende Schritte:
a) Bereitstellen eines zumindest zweiteiligen offen- und schließbaren Formwerkzeugs (1) mit mindestens einem ersten Formteil (1a) und einem zweiten Formteil (1b), welche Formteile im geschlossenen Zustand des Formwerkzeugs einen Hohlraum (3) bilden und die dreidimensionale Außenform des Dämmelements wiedergeben, wobei die Formteile im geschlossenen Zustand des Formwerkzeugs miteinander verbunden und im geöffneten Zustand des Formwerkzeugs zumindest teilweise voneinander getrennt sind;
b) Anordnen mindestens eines flächenartigen Verstärkungselements (2a) am ersten Formteil (1a) und mindestens eines flächenartigen Verstärkungselements (2b) am zweiten Formteil (1b), wobei sich die flächenartigen Verstärkungselemente im geschlossenen Zustand des Formwerkzeugs im von den Formteilen gebildeten Hohlraum (3) befinden;
c) Einbringen einer fließfähigen, aushärtbaren Kunststoffmasse (4) in den durch die Formteile des Formwerkzeugs gebildeten Hohlraum (3);
d) Härtenlassen der Kunststoffmasse im Formwerkzeug;
e) Öffnen des Formwerkzeugs und Entnehmen des so gebildeten Dämmelements (5),
wobei es sich bei der fließfähigen, aushärtbaren Kunststoffmasse um Polyurethan (4) handelt,
wobei das Polyurethan Trennmittel enthält, wobei sich an den Verfahrensschritt e) folgende Schritte anschließen:
f) Anordnen von Abstandshaltern (6) am Dämmelement (5);
g) Einlegen des Dämmelements (5) in ein öffen- und schließbares Schäumwerkzeug (10), wobei die gesamte Oberfläche des Dämmelements durch die von ihm abragenden Abstandshalter (6) von Formflächen (12) des Schäumwerkzeugs (10) beabstandet gehalten wird;
h) Umfluten des Dämmelements (5) im geschlossenen Schäumwerkzeug (10) mit einer aushärtbaren Kunststoffmasse (14);
i) Aushärtenlassen der Kunststoffmasse im Schäumwerkzeug (10);
j) Öffnen des Schäumwerkzeugs und Entnehmen des nun ummantelten Dämmelements (5).

2. Verfahren nach Anspruch 1, **dadurch gekennzeichnet, dass** es sich bei den flächenartigen Verstärkungselementen um Matten (2a, 2b), Gewebe oder Gewirke handelt, wobei diese vorzugsweise aus Glasfasern gefertigt sind.

3. Verfahren nach Anspruch 2, **dadurch gekennzeichnet, dass** es sich bei den flächenartigen Verstärkungselementen um Glasfasermatten mit einem Gewicht von ca. 240 bis 360 g/m² handelt.

4. Verfahren nach einem der vorhergehenden Ansprüche, **dadurch gekennzeichnet, dass** es sich bei der fließfähigen, aushärtbaren Kunststoffmasse um Polyurethan (4) mit einer Schaumdichte von ca. 70 kg/m³ handelt, wobei der fertige Polyurethan-Schaum vorzugsweise einen mit Polystyrol vergleichbaren U-Wert aufweist.

5. Verfahren nach einem der vorhergehenden Ansprüche, **dadurch gekennzeichnet, dass** die Formflächen (12) des Schäumwerkzeugs (10) vor dem Arbeitsschritt g) mit Trennmittel und/oder Lack, insbesondere In-Mould-Lack (15) beschichtet werden.

6. Verfahren nach einem der vorhergehenden Ansprüche, **dadurch gekennzeichnet, dass** es sich bei der aushärtbaren Kunststoffmasse um Polyurethan (14), insbesondere um kompaktes Polyurethan mit einer Dichte von ca. 1.000 kg/m³ handelt.

7. Verfahren nach einem der vorhergehenden Ansprüche, **dadurch gekennzeichnet, dass** die Abstandshalter (6) in Schritt f) in das Dämmelement (5) eingedrückt werden.

8. Dämmelement, hergestellt durch ein Verfahren nach einem der Ansprüche 1 bis 8, umfassend einen Grundkörper aus härtbarem Kunststoff (4) sowie mindestens zwei, in den härtbaren Kunststoff integrierten flächenartigen Verstärkungselementen (2a, 2b), wobei es sich bei dem härtbaren Kunststoff um Polyurethan handelt.

9. Dämmelement nach Anspruch 8, **dadurch gekennzeichnet, dass** es sich bei den mindestens zwei flächenartigen Verstärkungselementen jeweils um eine Matte (2a, 2b), ein Gewebe und/oder ein Gewirke handelt, wobei es vorzugsweise aus Glasfasern gefertigt ist.

10. Dämmelement nach einem der Ansprüche 8 oder 9, **dadurch gekennzeichnet, dass** die mindestens zwei flächenartigen Verstärkungselemente (2a, 2b) voneinander beabstandet angeordnet sind.

11. Dämmelement nach einem der Ansprüche 8 bis 10, **dadurch gekennzeichnet, dass** es sich bei dem härtbaren Kunststoff um Polyurethan mit einer Schaumdichte von ca. 70 kg/m³ handelt, wobei das Polyurethan vorzugsweise einen mit Polystyrol vergleichbaren U-Wert aufweist.

12. Dämmelement nach einem der Ansprüche 8 bis 11, **dadurch gekennzeichnet, dass** es einen Mantel aus einer aushärtbaren Kunststoffmasse aufweist, wobei die aushärtbare Kunststoffmasse vorzugweise Polyurethan, insbesondere kompaktes Polyurethan mit einer Dichte von ca. 1.000 kg/m³ ist.

## Claims

1. A method for producing an insulating element for the production of frame parts, the method comprising the following steps:
a) providing an at least two-part openable and closable molding tool (1) having at least one first mold part (1a) and one second mold part (1b), said mold parts, in the closed state of the molding tool, forming a cavity (3) and representing the three-dimensional outer shape of the insulating element, the mold parts being connected to each other in the closed state of the molding tool and at least partially separated from each other in the opened state of the molding tool;
b) disposing at least one sheet-like reinforcing element (2a) at the first mold part (1a) and at least one sheet-like reinforcing element (2b) at the second mold part (1b), in the closed state of the molding tool, the sheet-like reinforcing elements being located in the cavity (3) formed by the mold parts;
c) introducing a flowable, curable plastic mass (4) into the cavity (3) formed by the mold parts of the molding tool;
d) allowing the plastic mass to harden in the molding tool;
e) opening the molding tool and removing the insulating element (5) formed in such a manner;
the flowable, curable plastic mass being polyurethane (4),
the polyurethane containing mold release agents, the following steps following method step e):
f) disposing spacers (6) at the insulating element (5);
g) inserting the insulating element (5) into an openable and closeable foaming tool (10), the entire surface of the insulating element being kept at a distance from mold surfaces (12) of the foaming tool (10) by the spacers (6) projecting from said insulating element;
h) surrounding the insulating element (5) in the closed foaming tool (10) with a curable plastic mass (14);
i) allowing the plastic mass to cure in the foaming tool (10);
j) opening the foaming tool and removing the now sheathed insulating element (5),

2. The method according to claim 1, **characterized in that** the sheet-like reinforcing elements are mats (2a, 2b), woven fabric or knitted fabric, these being made preferably of glass fibers.

3. The method according to claim 2, **characterized in that** the sheet-like reinforcing elements are glass fiber mats having a weight of about 240 to 360 g/m².

4. The method according to any one of the preceding claims, **characterized in that** the flowable, curable plastic mass is polyurethane (4) having a foam density of about 70 kg/m³, the finished polyurethane foam preferably having a U value comparable with polystyrene.

5. The method according to any one of the preceding claims, **characterized in that** the mold surfaces (12) of the foaming tool (10) are coated with a mold release agent and/or a coating, in particular an in-mold coating (15), before work step g).

6. The method according to any one of the preceding claims, **characterized in that** the curable plastic mass is polyurethane (14), in particular a compact polyurethane having a density of about 1,000 kg/m³.

7. The method according to any one of the preceding claims, **characterized in that** the spacers (6) are pressed into the insulating element (5) in step f).

8. An insulating element realized by a method according to any one of claims 1 to 8, said insulating element comprising a base body made of a hardenable plastic (4) and at least two sheet-like reinforcing elements (2a, 2b) integrated into the hardenable plastic, the hardenable plastic being polyurethane.

9. The insulating element according to claim 8, **characterized in that** the at least two sheet-like reinforcing elements are each a mat (2a, 2b), a woven fabric and/or a knitted fabric, wherein it is made preferably of glass fibers.

10. The insulating element according to claim 8 or 9, **characterized in that** the at least two sheet-like reinforcing elements (2a, 2b) are disposed at a distance from each other.

11. The insulating element according to any one of claims 8 to 10, **characterized in that** the hardenable plastic is polyurethane having a foam density of about 70 kg/m³, the polyurethane preferably having a U value comparable with polystyrene.

12. The insulating element according to any one of claims 8 to 11, **characterized in that** it has a sheath made of a curable plastic mass, the curable plastic mass preferably being polyurethane, in particular a compact polyurethane having a density of about 1,000 kg/m³.

## Revendications

1. Procédé pour produire un élément isolant pour la production de parties de châssis, le procédé comprenant les étapes suivantes :
a) fournir un outil de moulage (1) qui est au moins en deux parties et capable d'être ouvert et fermé et qui a au moins une première partie de moule (1a) et une deuxième partie de moule (1b), lesdites parties de moule, dans l'état fermé de l'outil de moulage, formant une cavité (3) et représentant la forme extérieure tridimensionnelle de l'élément isolant, les parties de moule étant reliées l'une à l'autre dans l'état fermé de l'outil de moulage et étant au moins partiellement séparées l'une de l'autre dans l'état ouvert de l'outil de moulage ;
b) disposer au moins un élément (2a) de renfort de type nappe sur la première partie de moule (1a) et au moins un élément (2b) de renfort de type nappe sur la deuxième partie de moule (1b), dans l'état fermé de l'outil de moulage, les éléments de renfort de type nappe étant situés dans la cavité (3) formée par les parties de moule ;
c) introduire une masse plastique (4) coulante et capable d'être cuite dans la cavité (3) formée par les parties de moule de l'outil de moulage ;
d) laisser durcir la masse plastique dans l'outil de moulage ;
e) ouvrir l'outil de moulage et enlever l'élément isolant (5) formé de cette manière, la masse plastique coulante et capable d'être cuite étant un polyuréthane (4),
le polyuréthane contenant des agents de démoulage, les étapes suivantes suivant l'étape de procédé e) :
f) disposer des entretoises (6) sur l'élément isolant (5) ;
g) insérer l'élément isolant (5) dans un outil de moussage (10) qui est capable d'être ouvert et fermé, toute la surface de l'élément isolant étant maintenue à distance de surfaces de moule (12) de l'outil de moussage (10) par les entretoises (6) faisant saillie dudit élément isolant ;
h) enrober l'élément isolant (5) dans l'outil de moussage (10) d'une masse plastique (14) capable d'être cuite ;
i) laisser cuire la masse plastique dans l'outil de moussage (10) ;
j) ouvrir l'outil de moussage et enlever l'élément isolant qui est maintenant enveloppé.

2. Procédé selon la revendication 1, **caractérisé en ce que** les éléments de renfort de type nappe sont des mats (2a, 2b), des tissus ou des tricots, dans lequel ceux-ci sont fabriqués, de préférence, de fibres de verre.

3. Procédé selon la revendication 2, **caractérisé en ce que** les éléments de renfort de type nappe sont des mats de fibres de verre ayant un poids d'environ 240 à 360 g/m².

4. Procédé selon l'une quelconque des revendications précédentes, **caractérisé en ce que** la masse plastique coulante et capable d'être cuite est un polyuréthane (4) ayant une densité de mousse d'environ 70 kg/m³, la mousse de polyuréthane finie ayant, de préférence, une valeur U comparable au polystyrène.

5. Procédé selon l'une quelconque des revendications précédentes, **caractérisé en ce que** les surfaces de moule (12) de l'outil de moussage (10) sont revêtues d'un agent de démoulage et/ou d'un revêtement, notamment un revêtement en moule (15), avant l'étape de travail g).

6. Procédé selon l'une quelconque des revendications précédentes, **caractérisé en ce que** la masse plastique capable d'être cuite est un polyuréthane (14), notamment un polyuréthane compact ayant une densité d'environ 1.000 kg/m³.

7. Procédé selon l'une quelconque des revendications précédentes, **caractérisé en ce que** les entretoises (6) sont enfonées dans l'élément isolant (5) dans l'étape f).

8. Élément isolant produit par un procédé selon l'une quelconque des revendications 1 à 8, comprenant un corps de base fait d'une matière plastique (4) durcissable et d'au moins deux éléments (2a, 2b) de renfort de type nappe intégrés dans la matière plastique durcissable, la matière plastique durcissable étant un polyuréthane.

9. Élément isolant selon la revendication 8, **caractérisé en ce que** les au moins deux éléments de renfort de type nappe sont chacun un mat (2a, 2b), un tissu et/ou un tricot, dans lequel il est fabriqué, de préférence, de fibres de verre.

10. Élément isolant selon la revendication 8 ou 9, **caractérisé en ce que** les au moins deux éléments (2a, 2b) de renfort de type nappe sont disposés à distance l'un de l'autre.

11. Élément isolant selon l'une quelconque des revendications 8 à 10, **caractérisé en ce que** la matière plastique durcissable est un polyuréthane ayant une densité de mousse d'environ 70 kg/m³, le polyuréthane ayant, de préférence, une valeur U comparable au polystyrène.

12. Élément isolant selon l'une quelconque des revendications 8 à 11, **caractérisé en ce qu'**il a une enveloppe d'une masse plastique capable d'être cuite, la masse plastique capable d'être cuite étant de préférence un polyuréthane, notamment un polyuréthane compact ayant une densité d'environ 1.000 kg/m³.
